# EUROPÄISCHE PATENTSCHRIFT

(11) **EP 3 638 541 B1**
(45) Veröffentlichungstag und Bekanntmachung des Hinweises auf die Patenterteilung: **11.06.2025**
(21) Anmeldenummer: 18721958.9
(22) Anmeldetag: 05.04.2018
(51) Int. Cl.: B60Q 3/64, B60Q 3/20, B60Q 3/78

(54) **BELEUCHTUNG EINES INNENAUSSTATTUNGS- ODER INNENVERKLEIDUNGSTEILS IM INNENRAUM EINES KRAFTFAHRZEUGS SOWIE TRINKGEFÄSSHALTERUNG UND INNENVERKLEIDUNGSTEIL**
ILLUMINATION OF AN INTERIOR EQUIPMENT PART OR INTERIOR TRIM PART IN THE INTERIOR OF A MOTOR VEHICLE, CUP HOLDER, AND INTERIOR TRIM PART
ÉCLAIRAGE D'UN ÉLÉMENT D'ÉQUIPEMENT INTÉRIEUR OU D'HABILLAGE INTÉRIEUR DANS L'HABITACLE D'UN VÉHICULE AUTOMOBILE, SUPPORT DE RÉCIPIENT POUR BOISSON, ET ÉLÉMENT D'HABILLAGE INTÉRIEUR

(30) Priorität: 10.04.2017 DE 102017206054
(43) Veröffentlichungstag der Anmeldung: 22.04.2020
(73) Patentinhaber: Volkswagen Aktiengesellschaft, 38440 Wolfsburg (DE)
(72) Erfinder: PREOBRASCHENSKI, Alexej, 38442 Wolfsburg (DE); BÜLOW, Stefan, 38118 Braunschweig (DE)
(86) Internationale Anmeldenummer: PCT/EP2018/058722
(87) Internationale Veröffentlichungsnummer: WO 2018/189024

(56) Entgegenhaltungen:
- WO-A1-2008/154378
- WO-A1-2012/056799
- WO-A1-2012/132899
- DE-A1- 102009 017 296
- JP-A- 2003 191 782
- JP-A- 2014 043 220
- JP-A- 2015 229 455
- US-A1- 2010 315 826

## Beschreibung

Beleuchtung eines Innenausstattungs- oder Innenverkleidungsteils im Innenraum eines Kraftfahrzeugs sowie Trinkgefäßhalterung und Innenverkleidungsteil Die Erfindung betrifft eine Trinkgefäßhalterung mit den Merkmalen des Oberbegriffs des Patentanspruchs 1 sowie ein Innenverkleidungsteil mit den Merkmalen des Oberbegriffs des Patentanspruchs 4.

Eine Trinkgefäßhalterung für ein Kraftfahrzeug mit dem Merkmalen des Oberbegriffs des Patentanspruchs 1 sowie ein Innenverkleidungsteil mit den Merkmalen des Oberbegriffs des Patentanspruchs 4 sind aus der US 2010/0315826 A1 bekannt geworden. Dieses Dokument beschreibt eine Trinkgefäßhalterung mit zwei topfartigen Aufnahmeräumen. An der Oberseite der Trinkgefäßhalterung werden deren Aufnahmeräume durch eine Beleuchtungsvorrichtung mit einem länglichen Lichtleiter umrahmt. Dieses Dokument beschreibt weiterhin auch ein Innenverkleidungsteil. Es wird auch vorgeschlagen, in den Querschnitt des Lichtleiters bereichsweise lichtundurchlässige Elemente einzuspritzen.

In der DE 10 2009 017 296 A1 ist ein Getränkehalter beschrieben, bei dem ein beweglicher Nocken zum Fixieren eines Getränkebehälters eine obere Lichtaustrittsfläche aufweist. Diese ist bei unbestücktem Getränkehalter von oben einsehbar. Dabei wird das Licht einer Lichtquelle über ein Lichtleitelement von einer Lichteintrittsfläche bis hin zur Lichtaustrittsfläche geleitet.

Auch der JP 2015 229455 A ist eine Getränkehalterung zu entnehmen. Diese weist unterhalb ihres Bodens eine Lichtquelle auf. Oberhalb der Lichtquelle ist ein Lichtleiter angeordnet, der seinerseits von einer lichtdichten Abdeckung abgedeckt ist. Licht der Lichtquelle wird von unten in den Lichtleiter eingekoppelt, und in Längsrichtung des Lichtleiters (radial nach außen) weitergeleitet. Über einen radial seitlich umlaufenden Lichtaustrittsbereich zwischen der Abdeckung und einer Seitenwandung der Getränkehalterung tritt das weitergeleitete Licht als Beleuchtungslicht im Innern der Getränkehalterung wieder aus.

Die JP 2003 191782 A offenbart eine Getränkehalterung mit einer Lichtquelle, deren Licht über ein Lichteinkoppelteil in einen ringartigen Lichtleiter eingekoppelt wird. Im Lichtleiter wird das Licht in Längsrichtung weitergeleitet und aufgrund einer reflektierenden Schicht definiert ausgekoppelt.

In der WO 2008/154378 A1 wird ein Tür-Innenverkleidungsteil mit einem in einer Einfassung befindlichen Türöffner beschrieben. Der Türöffner ist als Lichtleiter ausgebildet. Über eine Lichteinkoppelstelle wird Licht einer Lichtquelle eingekoppelt, in Längsrichtung durch den Türöffner geleitet und aufgrund einer als Auskoppelstruktur dienenden opaken und reflektierenden Schicht, die die Vorderseite des Türöffners überzieht, in Richtung der Einfassung wieder ausgekoppelt.

Die JP 2014 043220 A offenbart ausrichtbare Lamellen eines Ausströmers, welche durch eine Lichtquelle beleuchtbar sind. Jede Lamelle 4 weist eine lichtleitende Komponente und eine diese umgebende, lichtundurchlässige Komponente auf. Nach vorne zur Ausströmungsöffnung hin ist die lichtleitende Komponente mit einer aus vielen Einzelschichten bestehenden, dekorativen Schicht überzogen. Diese Schicht lässt durch die lichtleitende Komponente geleitetes Licht nur in bestimmten, halb lichtdurchlässigen Bereichen hindurch.

Aus der WO 2012/056799 A1 ist eine Beleuchtungsvorrichtung für den Innenraum eines Kraftfahrzeugs bekannt geworden. Konkret ist eine Vielzahl von länglichen Lichtleitern mit ihren Stirnseiten aneinandergereiht und zieht sich gürtel- bzw. linienartig und horizontal entlang des Innenraums. Zwischen den einzelnen Lichtleitern sind lichtundurchlässige Elemente angeordnet. So soll sichergestellt werden, dass in einen Lichtleiter nur Licht über eine diesem Lichtleiter zugeordnete Lichteinkoppelstelle gelangen kann.

Schließlich wird in der WO 2012/132899 A1 eine Beleuchtungseinrichtung für den Innenraum eines Kraftfahrzeugs beschrieben, die in der Innenverkleidung des Kraftfahrzeugs montiert werden und als Innenraumbeleuchtung und Leseleuchte dienen kann.

Als flächige Innenraumbeleuchtung dient ein innerer Bereich eines flächigen Lichtleiters, in den stirnseitig Licht von Lichtquellen eingekoppelt wird und von der Llchteinkoppelseite zur gegenüberliegenden Seite verläuft.Um zu vermeiden, dass Licht der Lichtquellen auch in äußere Bereiche des Lichtleiters gelangt, sind in den Lichtleiter Nuten eingebracht, die mit reflektierendem Material ausgefüllt sind.

Die US 8 485 680 B2 offenbart eine Trinkgefäßhalterung mit zwei topfartigen Aufnahmeräumen. Auf deren oberen Rand ist ein flacher, umlaufender und lichtdurchlässiger Körper aufgelegt. Der lichtdurchlässige Körper weist mehrere flexible Laschen auf, die radial etwas in die Aufnahmeräume hineinragen und einem darin befindlichen Trinkgefäß Halt geben können. Auf dem lichtdurchlässigen Körper ist wiederum ein länglicher, umlaufender Lichtleiter aufgebracht, in den an zwei Seiten Licht von lichtemittierenden Dioden (LEDs) eingekoppelt wird. Nach oben, also zu einem Innenraum eines Kraftfahrzeugs hin, werden der lichtdurchlässige Körper und der Lichtleiter durch eine lichtundurchlässige Abdeckung abgedeckt. Im beleuchteten Zustand gelangt das in den Lichtleiter eingekoppelte Licht in den darunter befindlichen, lichtdurchlässigen Körper und über diesen in die erwähnten flexiblen Laschen, welche in die Aufnahmeräume hineinragen. Damit Licht von den flexiblen Laschen nicht nach oben in den Innenraum des Fahrzeugs gelangen kann, wird unter anderem vorgeschlagen, die flexiblen Laschen an ihrer Oberseite mit einer opaken Beschichtung zu versehen.

In der DE 10 2005 035 282 A1 wird eine Trinkgefäßhalterung mit einem topfförmigen Aufnahmeraum beschrieben, welcher von einem länglichen bzw. um die Außenwandung des Aufnahmeraums umlaufenden Lichtleiter umgeben ist. Der Lichtleiter ist zugleich auch als flexibler Federring ausgebildet und verleiht in den Aufnahmeraum ragenden Haltebacken zur Halterung von Trinkgefäßen eine gewisse Spannkraft auf. Durch eine an der Wandung des Aufnahmeraums befindliche Lichtquelle wird Licht in den Lichtleiter senkrecht zu seiner Linkserstreckung eingekoppelt und in Richtung der Haltebacken wieder ausgekoppelt. Im Dokument wird ferner eine Ablageschale beschrieben, welche im Zweikomponenten-Spritzgießverfahren hergestellt ist und bei der ein schalenartiger Lichtleiter und eine ebenso schalenartige, den Lichtleiter außen ummantelnde Abdeckung stoffschlüssig miteinander verbunden sind. Unterhalb des Lichtleiters ist eine Lichtquelle vorhanden, deren Licht in den Lichtleiter eingekoppelt wird und durch umlaufende Öffnungen der schalenartigen Abdeckung in Richtung von deren Ablageraum austreten kann.

Aus der WO 2014/058544 A1 ist ebenfalls eine beleuchtbare Trinkgefäßhalterung bekannt. Diese weist zwei topfartige Aufnahmeräume auf, welche durch eine lichtundurchlässige Innenverkleidung ausgekleidet sind. Die Innenverkleidung weist radial nach innen in die Aufnahmeräume weisende, halbkugelartige Ausbuchtungen auf. Die Ausbuchtungen sind flexibel ausgebildet und dienen zur flexiblen Fixierung eines Trinkgefäßes. Die die Aufnahmeräume bildende Wandung und die Auskleidung sind in einem Mehrkomponenten-Spritzgussverfahren hergestellt. Ferner sind an der Außenwandung der Aufnahmeräume Lichtquellen angeordnet, welche Licht in Richtung der halbkugelartigen Ausbuchtungen abgeben. Die halbkugelartigen Ausbuchtungen weisen wiederum lichtdurchlässige Elemente auf, durch die das Licht der Lichtquellen in die Aufnahmeräume gelangen kann.

Vor dem genannten Hintergrund des Standes der Technik liegt der vorliegenden Erfindung die Aufgabe zu Grunde, eine Trinkgefäßhalterung und ein Innenverkleidungsteil für ein Kraftfahrzeug bereitzustellen, bei welchen eine Beleuchtung auf effektive Weise und mit wenig Bauteilen möglich ist.

Die vorstehenden Aufgaben werden durch eine Trinkgefäßhalterung mit den Merkmalen von Patentanspruch 1 sowie durch ein Innenverkleidungsteil mit den Merkmalen von Patentanspruch 4 gelöst. Vorteilhafte Ausbildungen beziehungsweise Weiterbildungen der Erfindung sind jeweils abhängigen Ansprüchen zu entnehmen.

Es ist wenigstens ein länglicher Lichtleiter am Innenausstattungs- oder Innenverkleidungsteil angeordnet und Lichtstrahlen wenigstens eines Leuchtmittels werden in wenigstens eine Lichteinkoppelstelle des wenigstens einen Lichtleiters eingekoppelt. Die eingekoppelten Lichtstrahlen werden über wenigstens eine Lichtauskoppelstelle wieder ausgekoppelt.

Unter einem länglichen Lichtleiter soll im Sinne der vorliegenden Erfindung grundsätzlich ein solcher Lichtleiter verstanden werden, dessen Längserstreckung um ein Vielfaches größer ist als dessen Breite oder Dicke. Dabei kann der längliche Lichtleiter geradlinig, gebogen oder auch umlaufend sein. Auch dessen Querschnitt kann vielfältige Formen annehmen, beispielsweise rund, oval oder eckig sein.

Es ist ferner ein Merkmal, dass die Ausbreitung der eingekoppelten Lichtstrahlen in Längserstreckung des Lichtleiters an wenigstens einer Stelle des Lichtleiters unterbrochen wird.

Dabei erfolgt die Lichtunterbrechung an dieser Stelle wenigstens in einem solchen Teil vom Lichtleiterquerschnitt, der eine von einem Fahrzeuginsassen frei einsehbare Oberfläche aufweist.

Damit werden die Grundvoraussetzungen dafür geschaffen, dass ein Innenausstattungs- oder Innenverkleidungsteil effektiv beleuchtet werden kann und überdies eine ansprechende Anmutung im Erscheinungsbild der Beleuchtung für einen Fahrgast erzielbar ist.

Es wird ferner vorgeschlagen, dass die Unterbrechung der eingekoppelte Lichtstrahlen durch wenigstens eine zweite, lichtundurchlässige Materialkomponente verursacht wird, welche stoffschlüssig mit dem Lichtleiter verbunden ist. Durch diese Verfahrensausgestaltung ist eine sehr kostengünstige und bauteilarme Durchführung des Verfahrens möglich. Die stoffschlüssige Verbindung erfolgt vorzugsweise durch ein Zwei- oder Mehrkomponenten-Spritzgießverfahren.

An wenigstens einen Stelle können die eingekoppelten Lichtstrahlen teilweise in Längserstreckung des Lichtleiters hindurchgelassen werden. Hierdurch wird auf der einen Seite die flexible Schaffung eines für einen Fahrzeuginsassen ersichtlichen Erscheinungsbildes der Beleuchtung möglich, zum anderen können die einmal in den Lichtleiter eingekoppelten Lichtstrahlen an noch anderen Stellen des Lichtleiters genutzt werden.

Wie anfangs erwähnt, soll mit der Erfindung eine Trinkgefäßhalterung bereitgestellt werden. Hinsichtlich der Trinkgefäßhalterung geht die Erfindung von einer solchen Trinkgefäßhalterung aus, welche wenigstens einen topfartigen Aufnahmeraum aufweist, welcher durch eine obere, im Einbauzustand einem Innenraum des Kraftfahrzeugs zugewandte Umrandung begrenzt ist. Auf der Umrandung ist wenigstens ein länglicher Lichtleiter aufgebracht. Ferner ist wenigstens eine Lichtquelle vorhanden, deren Lichtstrahlen in den Lichtleiter einkoppelbar und senkrecht zu seiner Längserstreckung wieder auskoppelbar sind.

Der Lichtleiter weist an wenigstens einer Stelle einen Lichtleiterquerschnitt auf, bei dem die Ausbreitung der eingekoppelten Lichtstrahlen in Längserstreckung des Lichtleiters durch wenigstens eine zweite, lichtundurchlässige Materialkomponente zumindest bereichsweise unterbrochen ist. Die lichtundurchlässige Materialkomponente ist stoffschlüssig mit dem Lichtleiter verbunden. Dabei erfolgt die Lichtunterbrechung an dieser Stelle zumindest an einem solchen Teil vom Lichtleiterquerschnitt, der eine von einem Fahrzeuginsassen frei einsehbare Oberfläche beinhaltet.

Auf diese Weise kann eine angenehme Beleuchtung der Trinkgefäßhalterung ermöglicht werden. Die Materialkomponenten können vorzugsweise durch ein Zwei- oder Mehrkomponenten-Spritzgießverfahren miteinander verbunden sein.

Um trotz einer gewünschten oder erforderlichen Lichtunterbrechung an einer Stelle den erforderlichen Bauraum für den Lichtleiter klein halten zu können, wird gemäß der Erfindung vorgeschlagen, dass in Längserstreckung des Lichtleiters gesehen, die durch die lichtundurchlässige Materialkomponente gebildete Oberfläche und eine an diese angrenzende, transparente Oberfläche des Lichtleiters bündig aneinander angrenzen.

Es ist ein alternativer Bestandteil der Erfindung, dass sich an der einen Stelle des Lichtleiters die lichtundurchlässige Materialkomponente nur über einen Teil des Lichtleiterquerschnitts erstreckt. Hierdurch wird ermöglicht, dass trotz einer erfolgten Lichtunterbrechung dennoch ein Teil des Lichtes weiter in Längsrichtung des Lichtleiters geleitet werden kann und an anderer Stelle weiterhin zur Verfügung steht und genutzt werden kann.

Eine andere Weiterbildung schlägt vor, dass die Trinkgefäßhalterung wenigstens zwei topfartige Aufnahmeräume aufweist, wobei die wenigstens eine zweite, lichtundurchlässige Materialkomponente in einer Draufsicht auf die in Montageposition befindliche Trinkgefäßhalterung zwischen den wenigstens zwei topfartigen Aufnahmeräumen in den Lichtleiter eingebracht ist. Dies ist insbesondere dann von Vorteil, wenn ohne die Lichtunterbrechung zwischen den topfartigen Aufnahmeräumen - bedingt durch die Bauteilgeometrie oder andere Einflüsse - optische Inhomogenitäten in der Lichtabstrahlung auftreten. So kann vermieden werden, dass derartige Inhomogenitäten lokal sichtbar sind und es kann insgesamt ein besseres Erscheinungsbild erzielt werden.

Des Weiteren betrifft die vorliegende Erfindung auch ein Innenverkleidungsteil für ein Kraftfahrzeug. Ein solches Innenverkleidungsteil kann beispielsweise eine Instrumententafel, eine Dachhimmelverkleidung, eine Türseitenverkleidung oder dergleichen sein.

Dabei geht die Erfindung von einem Innenverkleidungsteil aus, welches wenigstens einen länglichen Lichtleiter aufweist und mit wenigstens einem Leuchtmittel ausgestattet ist, dessen Licht in den Lichtleiter einkoppelbar und senkrecht zu seiner Längserstreckung wieder auskoppelbar ist.

Der Lichtleiter weist an wenigstens einer Stelle einen Lichtleiterquerschnitt auf, bei dem die Ausbreitung des eingekoppelten Lichts in Längserstreckung des Lichtleiters durch wenigstens eine zweite, lichtundurchlässige Materialkomponente unterbrochen ist. Die lichtundurchlässige Materialkomponente ist stoffschlüssig mit dem Lichtleiter verbunden, vorzugsweise mittels eines Zwei- oder Mehrkomponenten-Spritzgussverfahrens. Dabei erfolgt die Lichtunterbrechung an dieser Stelle zumindest in einem solchen Teil vom Lichtleiterquerschnitt, der eine von einem Fahrzeuginsassen frei einsehbare Oberfläche beinhaltet. Des Weiteren kann mit einem solchen Innenverkleidungsteil eine flexible und ansprechende Beleuchtung des Innenverkleidungsteils erzielt werden.

Um den Lichtleiter in seinem Bauraumbedarf niedrig halten zu können wird gemäß der Erfindung vorgeschlagen, dass in Längserstreckung des Lichtleiters gesehen, die durch die lichtundurchlässige Materialkomponente gebildete, frei einsehbare Oberfläche und eine an diese angrenzende, transparente Oberflächen des Lichtleiters bündig aneinander angrenzen.

Zur optimalen Ausnutzung des eingekoppelten Lichts eines Leuchtmittels wird vorgeschlagen, dass sich an der wenigstens einen Stelle die lichtundurchlässige Materialkomponente nur über einen Teil des Lichtleiterquerschnitts erstreckt.

Um den negativen Effekt einer durch Lichtreflexion verursachten Lichtansammlung (Lichtspot) im Endbereich des Lichtleiters zu vermeiden, wird zudem in einer anderen Ausbildung der Erfindung vorgeschlagen, dass die wenigstens eine Stelle der lichtundurchlässigen Materialkomponente an einem solchen Ende des Lichtleiters angeordnet ist, welches der wenigstens einen Lichtquelle gegenüberliegt, wobei an der Stelle der gesamte Lichtleiterquerschnitt mit der lichtundurchlässigen Materialkomponente ausgefüllt ist.

Schließlich soll mit der Erfindung auch ein Kraftfahrzeug unter Schutz gestellt werden, welches wenigstens eine erfindungsgemäße Trinkgefäßhalterung oder wenigstens ein erfindungsgemäßes Innenverkleidungsteil aufweist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Es zeigen, jeweils schematisch
- Fig. 1: eine Darstellung zur allgemeinen Erläuterung der Erfindung,
- Fig. 2: eine Darstellung gemäß Schnittverlauf II aus Fig. 1,
- Fig. 3: eine Darstellung vergleichbar mit Fig. 1 zur Erläuterung einer Weiterbildung der Erfindung,
- Fig. 4: eine Darstellung gemäß Schnittansicht IV aus Fig. 3,
- Fig. 5: eine Trinkgefäßhalterung für ein Kraftfahrzeug zur Durchführung der Erfindungin einer Draufsicht von oben,
- Fig. 6: eine seitliche Ansicht gemäß Ansicht VI aus Fig. 5,
- Fig. 7: eine Schnittdarstellung gemäß Schnittverlauf VII aus Fig. 5 in zwei Ausführungen,
- Fig. 8: die Darstellung eines Innenverkleidungsteils zur Durchführung der Erfindung,
- Fig. 9: eine Teilschnittdarstellung des Innenverkleidungsteils gemäß Schnittansicht IX aus Fig. 8 in zwei Ausführungsformen und
- Fig. 10: eine Darstellung der Einbettung des Lichtleiters in das Innenverkleidungsteil in einer Ansicht quer zu seiner Längserstreckung, in zwei Ausführungsformen.

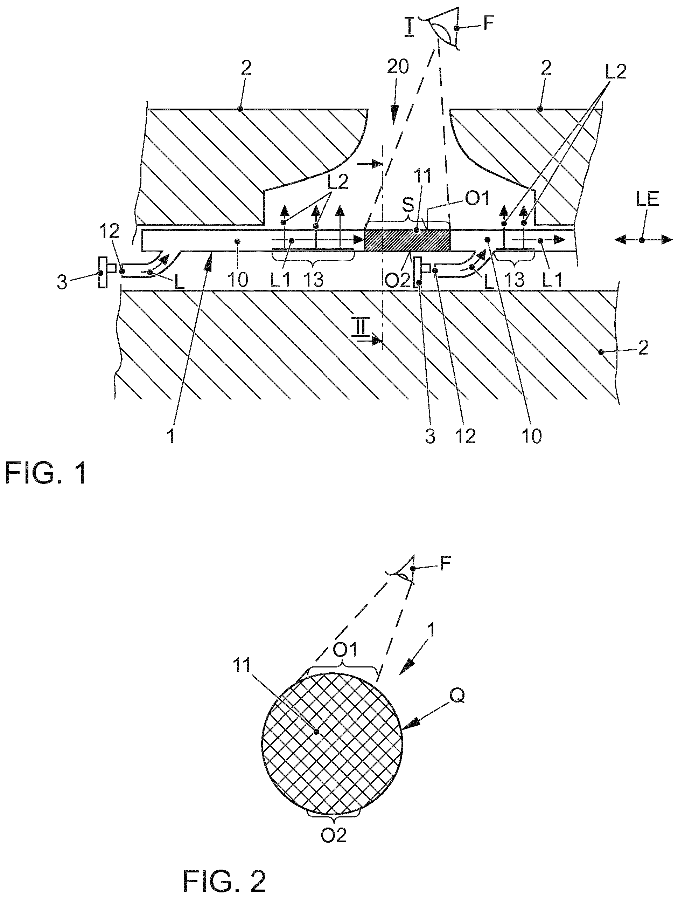

Zunächst wird auf die Figuren 1 und 2 näher Bezug genommen. In diesen Figuren ist ein Lichtleiter 1 ersichtlich, der in einem Innenverkleidungsteil 2 angeordnet ist. Der Lichtleiter 1 ist als längliches Bauteil ausgebildet mit einer Längserstreckung LE. In den Lichtleiter 1 sind über mehrere Lichteinkoppelstellen 12, von denen in der Figur lediglich zwei ersichtlich sind, Lichtstrahlen L von Leuchtmitteln 3 einkoppelbar. Der Lichtleiter 1 ist durch eine transparente Materialkomponente 10 gebildet.

Ferner weist der Lichtleiter 1 an mehreren Stellen S, welche sich in gleichmäßigen Abständen über die Längserstreckung LE des Lichtleiters 1 verteilen, lichtundurchlässige Materialkomponenten 11 auf. Von den lichtundurchlässigen Materialkomponenten 11 bzw. Stellen S ist in der Figur auch nur eine ersichtlich. Ein Teil der eingekoppelten Lichtstrahlen L, nämlich Lichtstrahlen L1, wird in seiner Ausbreitung in Längserstreckung LE an der Stelle S unterbrochen, während ein anderer Teil von Lichtstrahlen L2 an einer Lichtauskoppelstelle 13 in etwa senkrecht zur Längserstreckung LE des Lichtleiters 1 in Richtung eines Innenraums I eines nicht näher dargestellten Kraftfahrzeugs ausgekoppelt wird. Die ausgekoppelten Lichtstrahlen L2 können auf Grund einer im Innenverkleidungsteil 2 eingebrachten Freistelle 20 in den Innenraum I gelangen.

Die lichtundurchlässige Materialkomponente 11 ist dabei derart in den Lichtleiter 1 eingebettet, dass die durch sie verursachte Lichtunterbrechung auch in einem solchen Teil vom Lichtleiterquerschnitt Q erfolgt, der eine von einem Fahrzeuginsassen F frei einsehbare Oberfläche O1 aufweist.

Im vorliegenden Ausführungsbeispiel ist an der Stelle S der gesamte Querschnitt Q des Lichtleiters 1 mit der lichtundurchlässigen Materialkomponente ausgefüllt und reicht bis zu einer gegenüberliegenden, im Einbauzustand des Lichtleiters 1 nicht frei einsehbaren Oberfläche O2. Die eingekoppelten Lichtstrahlen L werden an der Stelle S also an ihrer Ausbreitung vollständig gehindert und können sich nicht in Längserstreckung LE des Lichtleiters 1 weiter ausbreiten. Daher sind im Ausführungsbeispiel über die Länge des Lichtleiters 1 mehrere Leuchtmittel 3 und mehrere Lichteinkoppelstellen 12 vorhanden. Die im vorliegenden Ausführungsbeispiel gezeigten Leuchtmittel 3, wie auch alle später genannten Leuchtmittel sind vorzugsweise als Leuchtdioden (LEDs) ausgebildet. Der Querschnitt Q des Lichtleiters 1 ist vorliegend kreisrund ausgebildet, die Form des Querschnitts Q kann jedoch auch von dieser Form abweichen und beispielsweise mehreckig ausgebildet sein.

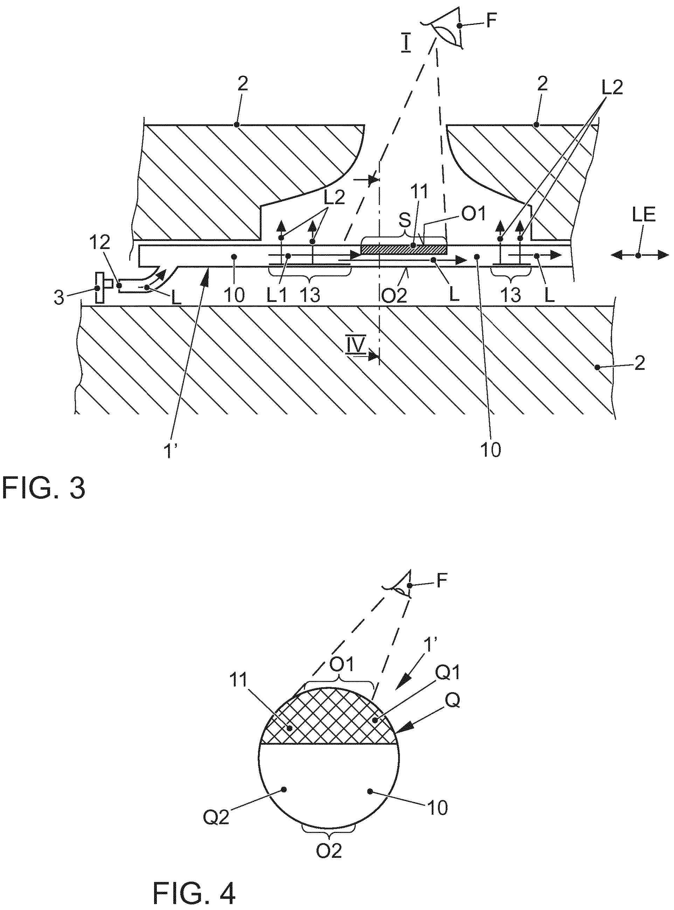

Anhand der Fig. 3 und 4 wird, im Unterschied zu den vorherigen Figuren, ein länglicher Lichtleiter 1' dargestellt, bei dem sich im Unterschied zum Lichtleiter 1 an den Stellen S die lichtundurchlässige Materialkomponente 11 nur teilweise über den Lichtleiterquerschnitt Q erstreckt. Der Lichtleiterquerschnitt Q teilt sich somit in einen ersten Teil Q1 mit der lichtundurchlässigen Materialkomponente 11 und einen zweiten Teil Q2 mit der transparenten Materialkomponente 10 auf.

Aber auch bei dieser Ausführungsform ist die lichtundurchlässige Materialkomponente 11 derart in den Lichtleiter 1' eingebracht, dass an den Stellen S eine Lichtunterbrechung von den eingekoppelten Lichtstrahlen L (nämlich Lichtstrahlen L1) zumindest in dem Teil Q1 vom Lichtleiterquerschnitt Q erfolgt, der wiederum die vom Fahrzeuginsassen F frei einsehbare Oberfläche O1 des Lichtleiters 1' aufweist.

Der für den Fahrzeuginsassen F erzielbare optische Effekt ist vergleichbar mit demjenigen des ersten Ausführungsbeispiels. Er nimmt nämlich die Stelle S zwischen den Lichtauskoppelstellen 13 wiederum als "blinden Fleck" wahr, was zu einem optisch ansprechenden und interessanten Erscheinungsbild führt.

Der Vorteil bei dieser Ausführungsform liegt darin, dass dennoch Lichtstrahlen L nicht an ihrer Ausbreitung in Längserstreckung LE gehindert werden und somit woanders weiter zur Nutzung bzw. Lichtauskopplung zur Verfügung stehen, ohne dass weitere Leuchtmittel 3 und Lichteinkoppelstellen 12 zur Verfügung gestellt werden müssen.

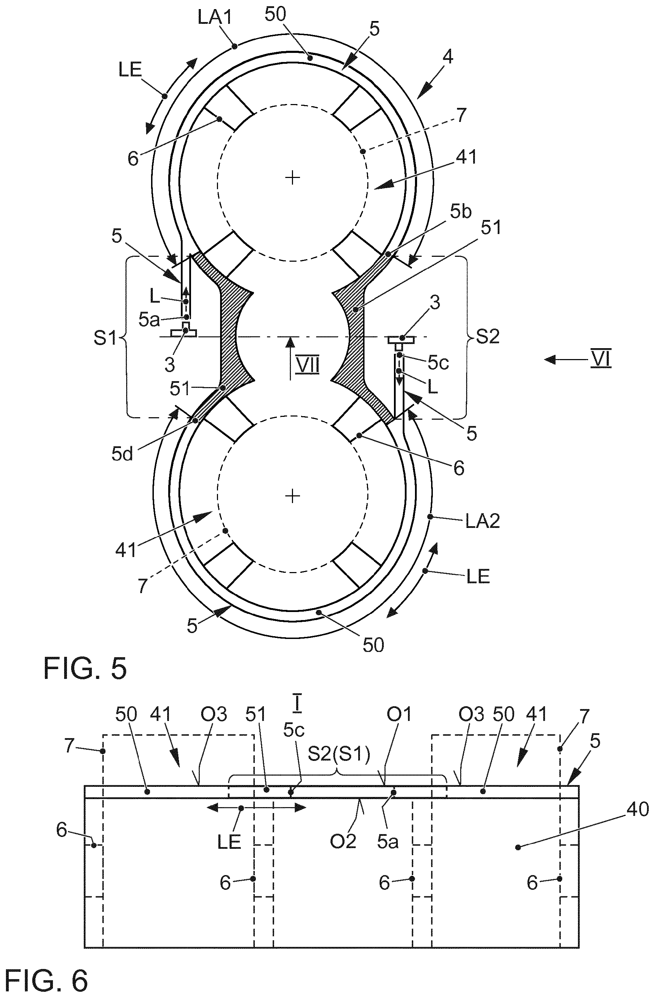

Nunmehr wird anhand der Fig. 5 bis 7 ein Verfahren zur Beleuchtung eines Innenausstattungsteils in Form einer Trinkgefäßhalterung 4 beschrieben. Die Trinkgefäßhalterung 4 (auch Cupholder genannt) weist zwei topfartige Aufnahmeräume 41 auf, in denen jeweils ein Trinkgefäß 7 (gestrichelt angedeutet) abgestellt werden kann. Durch radial bewegliche Haltebacken 6, welche sich nach innen in die topfartigen Aufnahmeräume 41 erstrecken und federvorgespannt sind, können abgestellte Trinkgefäße 7 sicher aber entnehmbar festgeklemmt werden. Die Aufnahmeräume 41 werden durch eine umlaufende Wandung 40 gebildet. Auf der Wandung 40 liegt oben (in Richtung eines Innenraums I) ein länglicher gebogener bzw. länglich umlaufender Lichtleiter 5 auf und ist in geeigneter Weise mit der Wandung 40 befestigt.

Wie in der Fig. 5 zu ersehen ist, bildet der Lichtleiter 5 den Verlauf der Wandung 40 nach, wobei der Lichtleiter 5 aus einer transparenten Materialkomponente 50 besteht, welche an zwei Stellen S1 und S2 durch jeweils eine lichtundurchlässige Materialkomponente 51 unterbrochen ist. Ferner ist ersichtlich, dass in den Lichtleiter 5 über zwei Lichteinkoppelstellen 5a und 5c Lichtstrahlen L von Leuchtmitteln 3 in diesen eingekoppelt werden. Die in die Lichteinkoppelstelle 5a eingekoppelten Lichtstrahlen L werden durch den Lichtleiter 5 in Längserstreckung LE weitergeleitet, wobei deren Lichtausbreitung durch eine Lichtunterbrechung 5b unterbrochen wird. Die Lichtunterbrechung 5b ist durch die Stelle S2 bedingt. Die in die Lichteinkoppelstelle 5c eingekoppelten Lichtstrahlen L gelangen in Längserstreckung LE des Lichtleiters 5 bis hin zu einer Lichtunterbrechung 5d, welche ihrerseits durch die Stelle S1 bedingt ist. Die Materialkomponenten 50 und 51 sind wiederum vorzugsweise über ein Zweikomponenten-Spritzgussverfahren stoffschlüssig miteinander verbunden.

Der Lichtleiter 5 ist zumindest über einen Großteil seiner Längserstreckung LE mit geeigneten, nicht näher dargestellten Lichtauskoppelstrukturen versehen, die eine Auskopplung der eingekoppelten Lichtstrahlen L senkrecht zur Längserstreckung LE des Lichtleiters in Richtung des Innenraums I erlauben. Daher werden im Wesentlichen zwei Lichtaustrittsbereiche LA1 und LA2 gebildet, die in einer Draufsicht auf die Trinkgefäßhalterung 4 ein teilkreisförmiges Aussehen haben und durch die lichtundurchlässigen Bereiche S1 und S2 voneinander getrennt sind. Mit anderen Worten liegen die Bereiche S1 und S2 zwischen den Lichtaustrittsbereichen LA1 und LA2, und zwar dort, wo die Wandung 40 bzw. der Umriss des Lichtleiters 5 Ecken 52 aufweist, was dort zu einer inhomogenen Lichtabstrahlung führt. Durch die Anordnung der Stellen S1 und S2 in diesen Bereichen kann ein inhomogenes Lichterscheinungsbild elegant vermieden werden.

Aus Fig. 6 wird deutlich, dass die frei einsehbare Oberfläche O1 der Stellen S1 und S2 bündig an Oberflächen O3 angrenzt, die jeweils durch die transparente Materialkomponente 50 des Lichtleiters 5 gebildet sind.

Auf diese Weise wird trotz des Vorhandenseins mehrerer Materialkomponenten eine sehr flache Bauweise des Lichtleiters 5 ermöglicht, was bei beengten Platzverhältnissen große Vorteile bietet.

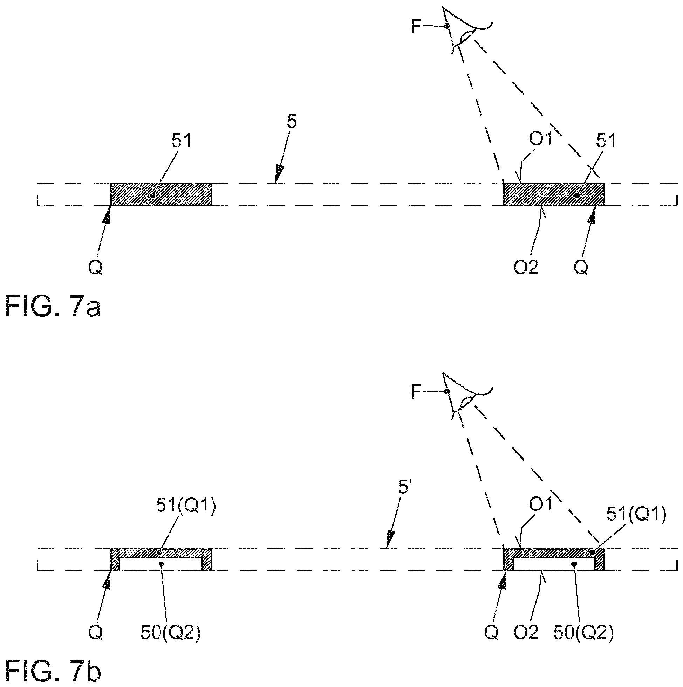

In der Fig. 7a ist ersichtlich, dass an den Stellen S1 und S2 der gesamte Querschnitt Q des Lichtleiters 5 durch die lichtundurchlässige Materialkomponente 51 ausgefüllt ist.

Anhand der Fig. 7b, welche eine alternative Ausführungsform 5' eines Lichtleiters darstellt, kann man erkennen, dass an den Stellen S1 und S2 lediglich ein Teil Q1 vom Lichtleiterquerschnitt Q des Lichtleiters 5' mit der lichtundurchlässigen Materialkomponente 51 und ein anderer Teil Q2 mit der transparente Materialkomponente 50 ausgefüllt ist. Dies hat wiederum den bereits anhand der Fig. 3 und 4 beschriebenen Vorteil, dass sich trotz der partiellen Lichtunterbrechung an den Stellen S1 und S2 ein Teil der eingekoppelten Lichtstrahlen L sich weiter in Längserstreckung LE des Lichtleiters 5' ausbreiten kann. Beim Einsatz des Lichtleiters 5' kann unter Umständen somit auch eines der beiden Leuchtmittel 3 entfallen.

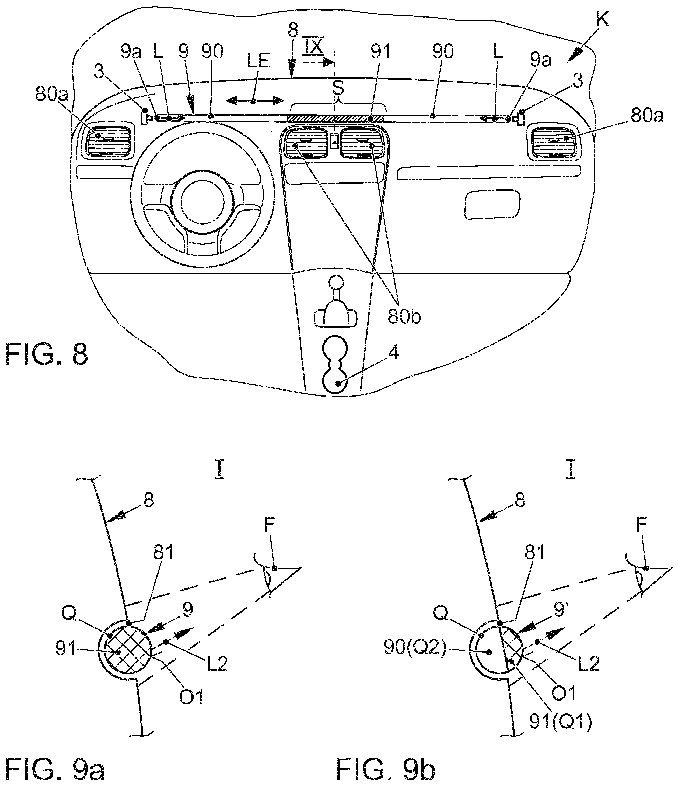

Die Figuren 8 und 9 zeigen nun ein weiteres Ausführungsbeispiel der Erfindung anhand eines Innenverkleidungsteils 8 im Innenraum eines Kraftfahrzeugs K. Bei dem Innenverkleidungsteil 8 handelt es sich um eine Instrumententafel des Kraftfahrzeugs K. In das Innenverkleidungsteil 8 ist senkrecht zur Fahrtrichtung beziehungsweise zur Längsrichtung des Kraftfahrzeugs K ein länglicher Lichtleiter 9 mit einer transparenten Materialkomponente 90 eingebracht. Der Lichtleiter 9 erstreckt sich mit seiner Längserstreckung LE zwischen außen liegenden Ausströmern 80a, also über einen Großteil des Innenverkleidungsteils 8. Über zwei Lichteinkoppelstellen 9a an den Stirnseiten des Lichtleiters 9 werden über Leuchtmittel 3 Lichtstrahlen L in Längserstreckung LE des Lichtleiters 9 eingekoppelt. Der Lichtleiter 9 ist in vertikaler Richtung in etwa in der Mitte des Innenverkleidungsteils 8 angeordnet und teilt dieses optisch in einen oberen und einen unteren Teil auf. Der Lichtleiter 9 ist oberhalb der außen liegenden Ausströmer 80a und auch oberhalb der mittleren Ausströmer 80b angeordnet. Ferner ist ersichtlich, dass der Lichtleiter 9 im Bereich oberhalb der mittleren Ausströmer 80b eine Stelle S aufweist, in der eine lichtundurchlässige Komponente 91 in den Lichtleiter 9 eingebracht ist. Auf diese Weise kann ein spezielles Erscheinungsbild in der Beleuchtung des Innenverkleidungsteils 8 erzielt werden. Darüber hinaus ist erkennbar, dass auch die bereits beschriebene Trinkgefäßhalterung 4 in einer Mittelkonsole des Kraftfahrzeugs K verbaut ist.

Wie aus den Fig. 9a und 9b deutlich wird, welche zwei unterschiedliche Ausführungen von Lichtleitern 9 und 9' zeigen, kann an der Stelle S der Querschnitt Q des Lichtleiters 9 vollständig von der lichtundurchlässigen Materialkomponente 91 ausgefüllt sein (Lichtleiter 9). Es ist auch möglich, dass die lichtundurchlässige Materialkomponente 91 nur einen Teil Q1 des Querschnitts Q vom Lichtleiter ausfüllt und der andere Teil Q2 von einer transparenten Komponente 90 ausgefüllt wird (Lichtleiter 9'). Die Materialkomponenten 90 und 91 sind vorzugsweise wiederum stoffschlüssig über ein Zweikomponenten-Spritzgussverfahren miteinander verbunden.

In beiden Fällen ist die lichtundurchlässige Komponente 91 in einem solchen Teil vom Querschnitt Q, welcher eine von einem Fahrzeuginsassen F frei einsehbare Oberfläche O1 aufweist. Die Lichtleiter 9, 9' sind jeweils in einem länglichen Kanal 81 eingebettet, der sich entlang des Innenverkleidungsteils 8 zieht. Gestrichelt sind Lichtstrahlen L2 angedeutet, die zeigen, dass die eingekoppelten Lichtstrahlen L in etwa senkrecht zur Längserstreckung LE der Lichtleiter 9 beziehungsweise 9' aus diesen ausgekoppelt werden.

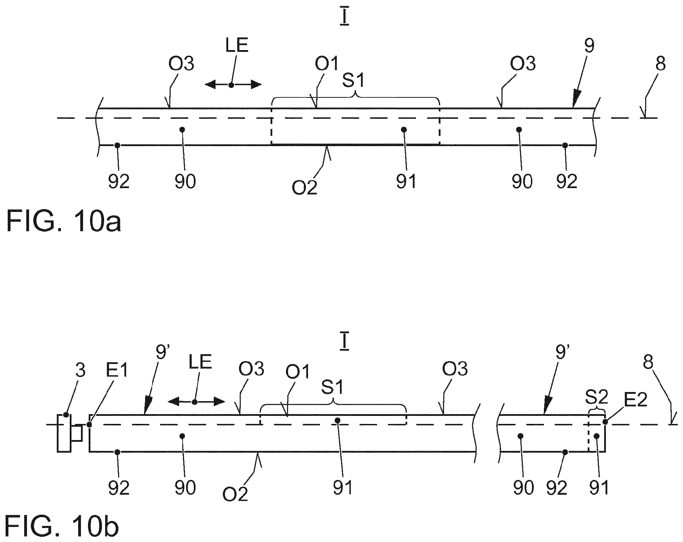

Schließlich ist anhand der Figuren 10a und 10b eine Ansicht dargestellt, welche die Einbettung der Lichtleiter 9, 9' senkrecht zur Längserstreckung des Innenverkleidungsteils 8 zeigt. Dessen dem Innenraum I zugewandte Oberseite ist lediglich gestrichelt angedeutet. Mit 92 sind ebenfalls Lichtauskoppelstellen bzw. Lichtauskoppelstrukturen angedeutet.

Bei beiden Ausführungsformen der Lichtleiter 9, 9' weisen diese an der Stelle S1, wo sich die lichtundurchlässige Materialkomponente 91 befindet, eine frei einsehbare Oberfläche O1 auf. Beidseitig an die Oberfläche O1 grenzen an die lichtundurchlässige Materialkomponente 91 ebenfalls frei einsehbare Oberflächen O3 an, welche durch die transparente Komponente 90 gebildet sind.

Bei der Fig. 10b ist noch eine Besonderheit dahingehend zu erwähnen, dass der Lichtleiter 9' an einem Ende E2 zusätzlich mit einer Stelle S2 versehen ist, in die der Lichtleiter 9' mit einer lichtundurchlässigen Materialkomponente 91 vollständig ausgefüllt ist. Dies führt dazu, dass Lichtstrahlen, die durch das Leuchtmittel 3 an einem Ende E1 eingekoppelt werden und nicht an der Stelle S1 bereits in ihrer Lichtausbreitung unterbrochen werden, bis zum Ende E2 weitergeleitet werden und dort auf die lichtundurchlässige Materialkomponente 91 auftreffen.

Die lichtundurchlässige Materialkomponente 91 verhindert eine Teilreflexion der Lichtstrahlen am stirnseitigen Ende E2. Auf diese Weise kann dort die Entstehung eines unerwünschten Lichtspots verhindert werden.

### Bezugszeichenliste

- 1, 1': Lichtleiter
- 2: Innenverkleidungsteil
- 3: Leuchtmittel; LED
- 4: Trinkgefäßhalterung
- 5, 5': Lichtleiter
- 5a: Lichteinkoppelstelle
- 5b: Lichtunterbrechung
- 5c: Lichteinkoppelstelle
- 5d: Lichtunterbrechung
- 6: Haltebacken
- 7: Trinkgefäß
- 8: Innenverkleidungsteil
- 9, 9': Lichtleiter
- 9a: Lichteinkoppelstelle
- 10: transparente Materialkomponente
- 11: lichtundurchlässige Materialkomponente
- 12: Lichteinkoppelstelle
- 13: Lichtauskoppelstelle
- 20: Freistelle
- 40: Wandung
- 41: topfartige Aufnahmeräume
- 50: transparente Materialkomponente
- 51: lichtundurchlässige Materialkomponente
- 52: Ecken
- 80a: außenliegende Ausströmer
- 80b: mittlere Ausströmer
- 81: Kanal
- 90: transparente Materialkomponente
- 91: lichtundurchlässige Materialkomponente
- 92: Lichtauskoppelstellen

- E1, E2: stirnseitige Enden
- F: Fahrzeuginsasse
- I: Innenraum
- K: Kraftfahrzeug
- L: Lichtstrahlen
- LA1: Lichtaustrittsbereich
- LA2: Lichtaustrittsbereich
- L1: Lichtstrahlen
- L2: Lichtstrahlen
- L3: Lichtstrahlen
- LE: Längserstreckung
- O1: frei einsehbare Oberfläche
- O2: nicht frei einsehbare Oberfläche
- O3: an lichtundurchlässige Komponente angrenzende Oberflächen
- Q: Lichtleiterquerschnitt
- Q1, Q2: Teile vom Lichtleiterquerschnitt
- S: Stelle des Lichtleiters mit lichtundurchlässiger Materialkomponente
- S1, S2: Stellen des Lichtleiters mit lichtundurchlässiger Materialkomponente

## Patentansprüche

1. Trinkgefäßhalterung (4) für ein Kraftfahrzeug (K), mit wenigstens einem topfartigen Aufnahmeraum (41), welcher durch eine obere, im Einbauzustand einem Innenraum (I) des Kraftfahrzeugs (K) zugewandte Umrandung begrenzt ist, wobei auf der Umrandung wenigstens ein länglicher Lichtleiter (5, 5') aufgebracht ist, und mit wenigstens einem Leuchtmittel (3), dessen Lichtstrahlen (L) in den Lichtleiter (5, 5') einkoppelbar und senkrecht zu seiner Längserstreckung (LE) wieder auskoppelbar sind, wobei der Lichtleiter (5, 5') an wenigstens einer sich in Längserstreckung (LE) des Lichtleiters (5, 5') erstreckenden Stelle (S1, S2) einen Lichtleiterquerschnitt (Q) aufweist, bei dem die Ausbreitung der eingekoppelten Lichtstrahlen (L) innerhalb und in Längserstreckung (LE) des Lichtleiters (5, 5') durch wenigstens eine zweite, lichtundurchlässige Materialkomponente (51) zumindest bereichsweise unterbrochen ist, wobei die lichtundurchlässige Materialkomponente (51) stoffschlüssig mit dem Lichtleiter (5, 5') verbunden ist, **dadurch gekennzeichnet, dass** an dieser Stelle (S1, S2) entweder der gesamte Lichtleiterquerschnitt (Q) durch die lichtundurchlässige Materialkomponente (51) ausgefüllt ist und in Längserstreckung (LE) des Lichtleiters (5) gesehen, die durch die lichtundurchlässige Materialkomponente (51) gebildete Oberfläche (O1) und eine an diese angrenzende, durch eine transparente Materialkomponente (50) gebildete, transparente Oberfläche (O3) des Lichtleiters (5) bündig aneinander angrenzen **oder dadurch gekennzeichnet, dass** in Längserstreckung (LE) des Lichtleiters (5') gesehen, die durch die lichtundurchlässige Materialkomponente (51) gebildete Oberfläche (O1) und eine an diese angrenzende, durch eine transparente Materialkomponente (50) gebildete, transparente Oberfläche (O3) des Lichtleiters (5') bündig aneinander angrenzen und an dieser Stelle (S1, S2) der Lichtleiterquerschnitt (Q) in einen ersten Teil (Q1) mit der lichtundurchlässigen Materialkomponente (51) und einen zweiten Teil (Q2) mit der transparenten Materialkomponente (50) aufgeteilt ist, wobei, über die Länge der sich in Längserstreckung (LE) des Lichtleiters (5') erstreckenden Stelle (S1, S2) betrachtet, die lichtundurchlässige Materialkomponente (51) einen Teil einer Oberfläche des Lichtleiters (5') ausbildet und die transparente Materialkomponente (50) den restlichen Teil einer Oberfläche des Lichtleiters (5') ausbildet.

2. Trinkgefäßhalterung (4) nach Anspruch 1, **dadurch gekennzeichnet, dass** diese wenigstens zwei topfartige Aufnahmeräume (41) aufweist, wobei die wenigstens eine zweite, lichtundurchlässige Materialkomponente (51) in einer Draufsicht auf die in Montageposition befindliche Trinkgefäßhalterung (4) zwischen den wenigstens zwei topfartigen Aufnahmeräumen (41) in den Lichtleiter (5) eingebracht ist.

3. Trinkgefäßhalteung (4) nach einem der vorhergehenden Ansprüche, **dadurch gekennzeichnet, dass** die Aufnahmeräume (41) durch eine umlaufende Wandung (40) gebildet sind und der Lichtleiter (5) den Verlauf der Wandung (40) nachbildet, wobei der Lichtleiter (5) aus einer transparenten Materialkomponente (50) besteht, welche an zwei Stellen (S1, S2) durch jeweils eine lichtundurchlässige Materialkomponente (51) unterbrochen ist, wobei in den Lichtleiter (5) über eine erste Lichteinkoppelstelle (5a) und eine zweite Lichteinkoppelstelle (5c) Lichtstrahlen (L) von Leuchtmitteln (3) in diesen eingekoppelbar sind, wobei die in die erste Lichteinkoppelstelle (5a) eingekoppelten Lichtstrahlen (L) durch den Lichtleiter (5) in Längserstreckung (LE) weitergeleitet werden können und deren Lichtausbreitung durch eine erste Lichtunterbrechung (5b) unterbrochen werden kann, die durch eine (S2) der zwei Stellen (S1, S2) bedingt ist, wobei die in die zweite Lichteinkoppelstelle (5c) eingekoppelten Lichtstrahlen (L) in Längserstreckung (LE) des Lichtleiters (5) bis hin zu einer Lichtunterbrechung (5d) gelangen können, welche ihrerseits durch eine andere (S1) der zwei Stellen (S1, S2) bedingt ist, wobei die Materialkomponenten (50, 51) über ein Zweikomponenten-Spritzgussverfahren stoffschlüssig miteinander verbunden sind, wobei der Lichtleiter (5) zumindest über einen Großteil seiner Längserstreckung (LE) mit Lichtauskoppelstrukturen versehen ist, die eine Auskopplung der eingekoppelten Lichtstrahlen (L) senkrecht zur Längserstreckung (LE) des Lichtleiters (5) erlauben, wodurch zwei Lichtaustrittsbereiche (LA1, LA2) gebildet werden, die in einer Draufsicht auf die Trinkgefäßhalterung (4) ein teilkreisförmiges Aussehen haben und durch die zwei Stellen (S1, S2) voneinander getrennt sind, wobei die zwei Stellen (S1, S2) zwischen den Lichtaustrittsbereichen (LA1, LA2) liegen, und zwar dort, wo die Wandung (40) bzw. der Umriss des Lichtleiters (5) Ecken aufweist.

4. Innenverkleidungsteil (2, 8) für ein Kraftfahrzeug (K), mit wenigstens einem länglichen Lichtleiter (1, 1'; 9, 9') und mit wenigstens einem Leuchtmittel (3), dessen Licht in den Lichtleiter (1,1'; 9, 9') einkoppelbar und senkrecht zu seiner Längserstreckung (LE) wieder auskoppelbar ist, wobei der Lichtleiter (1, 1'; 9, 9') an wenigstens einer sich in Längserstreckung (LE) des Lichtleiters (1, 1'; 9, 9') erstreckenden Stelle (S) einen Lichtleiterquerschnitt (Q) mit einer zweiten, lichtundurchlässigen Materialkomponente (11, 91) aufweist, die stoffschlüssig mit dem Lichtleiter (1, 1'; 9, 9') verbunden ist, wobei an der Stelle (S) die Ausbreitung des eingekoppelten Lichts (L) innerhalb und in Längserstreckung des Lichtleiters (9, 9') durch die zweite, lichtundurchlässige Materialkomponente (11, 91) zumindest bereichsweise unterbrochen ist, **dadurch gekennzeichnet, dass** in Längserstreckung (LE) des Lichtleiters (1, 1'; 9, 9') gesehen, die durch die lichtundurchlässige Materialkomponente (11, 91) gebildete Oberfläche (O1) und eine an diese angrenzende, durch eine transparente Materialkomponente (10, 50) gebildete, transparente Oberfläche (O3) des Lichtleiters (1, 1'; 9, 9') bündig aneinander angrenzen, wobei an dieser Stelle (S) **entweder** der gesamte Lichtleiterquerschnitt (Q) durch die lichtundurchlässige Materialkomponente (11, 91) ausgefüllt ist **oder wobei** an dieser Stelle (S) der Lichtleiterquerschnitt (Q) in einen ersten Teil (Q1) mit der lichtundurchlässigen Materialkomponente (11, 91) und einen zweiten Teil (Q2) mit der transparenten Materialkomponente (10, 90) aufgeteilt ist, wobei, über die Länge der sich in Längserstreckung (LE) des Lichtleiters (1, 1'; 9, 9') erstreckenden Stelle (S) betrachtet, die lichtundurchlässige Materialkomponente (11, 91) einen Teil einer Oberfläche des Lichtleiters (1', 9') ausbildet und die transparente Materialkomponente (10, 90) den restlichen Teil der Oberfläche des Lichtleiters (1', 9') ausbildet.

5. Innenverkleidungsteil (2, 8) nach Anspruch 4, **dadurch gekennzeichnet, dass** wenigstens eine Stelle (S2) mit einer lichtundurchlässigen Materialkomponente (91) an einem solchen Ende (E2) des Lichtleiters (9') angeordnet ist, welches dem wenigstens einen Leuchtmittel (3) gegenüberliegt, wobei an der Stelle (S2) der gesamte Lichtleiterquerschnitt (Q) mit der lichtundurchlässigen Materialkomponente (91) ausgefüllt ist.

6. Kraftfahrzeug (K), **gekennzeichnet durch** wenigstens eine Trinkgefäßhalterung (4) nach einem der Ansprüche 1 bis 3 oder **gekennzeichnet durch** wenigstens ein Innenverkleidungsteil (2, 8) nach einem der Ansprüche 4 bis 5.

## Claims

1. Drinking vessel holder (4) for a motor vehicle (K), with at least one pot-like receiving space (41) which is delimited by an upper border facing an interior (I) of the motor vehicle (K) in the installed state, at least one elongate light guide (5, 5') being applied to the border, and with at least one illuminant (3), the light rays (L) of which can be coupled into the light guide (5, 5') and decoupled again perpendicularly to its longitudinal extension (LE), the light guide (5, 5') having a light guide cross-section (Q) at at least one point (S1, S2) extending in the longitudinal extension (LE) of the light guide (5, 5'), in which cross-section the propagation of the coupled light rays (L) within and in the longitudinal extension (LE) of the light guide (5, 5') is interrupted at least in some regions by at least a second, opaque material component (51), the opaque material component (51) being integrally bonded to the light guide (5, 5'), **characterized in that** at this point (S1, S2) either the entire light guide cross-section (Q) is filled by the opaque material component (51) and, viewed in the longitudinal extension (LE) of the light guide (5), the surface (01) formed by the opaque material component (51) and a transparent surface (O3) of the light guide (5) adjacent thereto and formed by a transparent material component (50) are flush with one another **or**
**characterized in that** viewed in the longitudinal extension (LE) of the light guide (5'), the surface (01) formed by the opaque material component (51) and a transparent surface (O3) of the light guide (5') adjacent thereto and formed by a transparent material component (50) are flush with one another and at this point (S1, S2) the light guide cross-section (Q) is divided into a first part (Q1) with the opaque material component (51) and a second part (Q2) with the transparent material component (50), where, viewed over the length of the point (S1, S2) extending in the longitudinal extension (LE) of the light guide (5'), the opaque material component (51) forms a part of a surface of the light guide (5') and the transparent material component (50) forms the remaining part of a surface of the light guide (5').

2. Drinking vessel holder (4) according to claim 1, **characterized in that** this has at least two pot-like receiving spaces (41), the at least a second, opaque material component (51) being introduced into the light guide (5) between the at least two pot-like receiving spaces (41) in a plan view of the drinking vessel holder (4) in the assembly position.

3. Drinking vessel holder (4) according to either of the preceding claims,
**characterized in that** the receiving spaces (41) are formed by a peripheral wall (40) and the light guide (5) reproduces the course of the wall (40), the light guide (5) consisting of a transparent material component (50) which is interrupted at two points (S1, S2) by an opaque material component (51) in each case, light beams (L) from illuminants (3) being able to be coupled into a first light coupling point (5a) and a second light coupling point (5c) via same in the light guide (5), the light beams (L) coupled into the first light coupling point (5a) being able to be forwarded by the light guide (5) in the longitudinal extension (LE) and the light propagation thereof being able to be interrupted by a first light interruption (5b) which is caused by one (S2) of the two points (S1, S2), the light beams (L) coupled into the second light coupling point (5c) being able to reach up to a light interruption (5d) in the longitudinal extension (LE) of the light guide (5), which light interruption in turn is caused by another (S1) of the two points (S1, S2), the material components (50, 51) being integrally bonded to one another via a two-component injection molding process, the light guide (5) being provided with light coupling structures at least over a large part of its longitudinal extension (LE), which allow the coupled-in light rays (L) to be coupled out perpendicularly to the longitudinal extension (LE) of the light guide (5), whereby two light exit regions (LA1, LA2) are formed, which have a partially circular appearance in a plan view of the drinking vessel holder (4) and are separated from one another by the two points (S1, S2), the two points (S1, S2) being located between the light exit regions (LA1, LA2), namely where the wall (40) or the outline of the light guide (5) has corners.

4. Interior trim part (2, 8) for a motor vehicle (K), having at least one elongate light guide (1, 1'; 9, 9') and having at least one illuminant (3), the light of which can be coupled into the light guide (1, 1'; 9, 9') and coupled out again perpendicularly to its longitudinal extension (LE), the light guide (1, 1'; 9, 9') having, at at least one point (S) extending in the longitudinal extension (LE) of the light guide (1, 1'; 9, 9'), a light guide cross-section (Q) with a second, opaque material component (11, 91) which is integrally bonded to the light guide (1, 1'; 9, 9'), the propagation of the coupled-in light (L) within and in the longitudinal extension of the light guide (9, 9') being interrupted at the point (S) by the second, opaque material component (11, 91) at least in some regions, **characterized in that** viewed in the longitudinal extension (LE) of the light guide (1, 1'; 9, 9'), the surface (01) formed by the opaque material component (11, 91) and a transparent surface (O3) of the light guide (1, 1'; 9, 9') adjacent thereto and formed by a transparent material component (10, 50) are flush with one another, **either** the entire light guide cross-section (Q) being filled at this point (S) by the opaque material component (11, 91) or the light guide cross-section (Q) being divided at this point (S) into a first part (Q1) with the opaque material component (11, 91) and a second part (Q2) with the transparent material component (10, 90), where, viewed over the length of the point (S) extending in the longitudinal extension (LE) of the light guide (1, 1'; 9, 9'), the opaque material component (11, 91) forms a part of a surface of the light guide (1', 9') and the transparent material component (10, 90) forms the remaining part of the surface of the light guide (1', 9').

5. Interior trim part (2, 8) according to claim 4, **characterized in that** at least one point (S2) with an opaque material component (91) is arranged at an end (E2) of the light guide (9') which is opposite the at least one illuminant (3), the entire light guide cross-section (Q) being filled at the point (S2) with the opaque material component (91).

6. Motor vehicle (K), **characterized by** at least one drinking vessel holder (4) according to any of claims 1 to 3 or **characterized by** at least one interior trim part (2, 8) according to either of claims 4 to 5.

## Revendications

1. Support de récipient pour boisson (4) pour un véhicule automobile (K), comportant au moins un espace de réception (41) en forme de pot délimité par une bordure supérieure tournée, à l'état monté, vers un espace intérieur (I) du véhicule automobile (K), dans lequel au moins un guide de lumière (5, 5') allongé est appliqué sur la bordure, et comportant au moins un moyen d'éclairage (3) dont les rayons lumineux (L) peuvent être couplés dans le guide de lumière (5, 5') et peuvent être à nouveau découplés perpendiculairement à son extension longitudinale (LE), dans lequel le guide de lumière (5, 5') présente une section transversale de guide de lumière (Q) au niveau d'au moins un point (S1, S2) s'étendant dans l'extension longitudinale (LE) du guide de lumière (5, 5'), section transversale de guide de lumière dans laquelle la propagation des rayons lumineux (L) couplés à l'intérieur et dans l'extension longitudinale (LE) du guide de lumière (5, 5') est interrompue au moins dans certaines zones par au moins un second composant de matériau opaque (51), dans lequel le composant de matériau opaque (51) est relié au guide de lumière (5, 5') par liaison de matière, **caractérisé en ce que,** au niveau dudit point (S1, S2), soit la totalité de la section transversale de guide de lumière (Q) est remplie par le composant de matériau opaque (51) et, vu dans l'extension longitudinale (LE) du guide de lumière (5), la surface (01) formée par le composant de matériau opaque (51) et une surface transparente (O3) du guide de lumière (5) adjacente à celle-ci et formée par un composant de matériau transparent (50) sont contiguës l'une à l'autre de manière affleurante, **soit caractérisé en ce que,** vu dans l'extension longitudinale (LE) du guide de lumière (5'), la surface (01) formée par le composant de matériau opaque (51) et une surface transparente (O3) du guide de lumière (5') adjacente à celle-ci et formée par un composant de matériau transparent (50) sont contiguës l'une à l'autre de manière affleurante et, au niveau dudit point (S1, S2), la section transversale de guide de lumière (Q) est divisée en une première partie (Q1) comportant le composant de matériau opaque (51) et une seconde partie (Q2) comportant le composant de matériau transparent (50), dans lequel, considéré sur la longueur du point (S1, S2) s'étendant dans l'extension longitudinale (LE) du guide de lumière (5'), le composant de matériau opaque (51) forme une partie d'une surface du guide de lumière (5') et le composant de matériau transparent (50) forme la partie restante d'une surface du guide de lumière (5').

2. Support de récipient pour boisson (4) selon la revendication 1,
**caractérisé en ce que** celui-ci présente au moins deux espaces de réception (41) en forme de pot, dans lequel l'au moins un second composant de matériau opaque (51) est introduit dans le guide de lumière (5) entre les au moins deux espaces de réception (41) en forme de pot, dans une vue de dessus du support de récipient pour boisson (4) se trouvant en position de montage.

3. Support de récipient pour boisson (4) selon l'une des revendications précédentes, **caractérisé en ce que** les espaces de réception (41) sont formés par une paroi (40) périphérique et le guide de lumière (5) reproduit le tracé de la paroi (40), dans lequel le guide de lumière (5) est constitué d'un composant de matériau transparent (50) qui est interrompu au niveau de deux points (S1, S2) par respectivement un composant de matériau opaque (51), dans lequel, dans le guide de lumière (5), des rayons lumineux (L) de moyens d'éclairage (3) peuvent être couplés dans celui-ci par l'intermédiaire d'un premier point de couplage de lumière (5a) et d'un second point de couplage de lumière (5c), dans lequel les rayons lumineux (L) couplés dans le premier point de couplage de lumière (5a) peuvent être transmis par le guide de lumière (5) dans l'extension longitudinale (LE) et leur propagation de lumière peut être interrompue par une première interruption de lumière (5b) qui est conditionnée par l'un (S2) des deux points (S1, S2), dans lequel les rayons lumineux (L) couplés dans le second point de couplage de lumière (5c) peuvent rejoindre, dans l'extension longitudinale (LE) du guide de lumière (5), une interruption de lumière (5d) qui est elle-même conditionnée par un autre (S1) des deux points (S1, S2), dans lequel les composants de matériau (50, 51) sont reliés entre eux par liaison de matière par l'intermédiaire d'un procédé de moulage par injection à deux composants, dans lequel le guide de lumière (5) est pourvu de structures de découplage de lumière au moins sur une grande partie de son extension longitudinale (LE), lesquelles permettent un découplage des rayons lumineux (L) couplés perpendiculairement à l'extension longitudinale (LE) du guide de lumière (5), moyennant quoi deux zones de sortie de lumière (LA1, LA2) sont formées, lesquelles, dans une vue de dessus du support de récipient pour boisson (4), ont un aspect en forme de cercle partiel et sont séparées l'une de l'autre par les deux points (S1, S2), dans lequel les deux points (S1, S2) se situent entre les zones de sortie de lumière (LA1, LA2), à savoir là où la paroi (40) ou le contour du guide de lumière (5) présente des coins.

4. Pièce d'habillage intérieur (2, 8) pour un véhicule automobile (K), comportant au moins un guide de lumière (1, 1' ; 9, 9') allongé et comportant au moins un moyen d'éclairage (3) dont la lumière peut être couplée dans le guide de lumière (1, 1' ; 9, 9') et peut être à nouveau découplée perpendiculairement à son extension longitudinale (LE), dans laquelle le guide de lumière (1, 1' ; 9, 9') présente une section transversale de guide de lumière (Q) comportant un second composant de matériau opaque (11, 91) au niveau d'au moins un point (S) s'étendant dans l'extension longitudinale (LE) du guide de lumière (1, 1' ; 9, 9'), laquelle section transversale de guide de lumière est reliée au guide de lumière (1, 1' ; 9, 9') par liaison de matière, dans laquelle la propagation de la lumière couplée (L) à l'intérieur et dans l'extension longitudinale du guide de lumière (9, 9') est interrompue au moins dans certaines zones par le second composant de matériau opaque (11, 91) au niveau du point (S), **caractérisée en ce que,** vu dans l'extension longitudinale (LE) du guide de lumière (1, 1' ; 9, 9'), la surface (O1) formée par le composant de matériau opaque (11, 91) et une surface transparente (O3) du guide de lumière (1, 1' ; 9, 9') adjacente à celle-ci et formée par un composant de matériau transparent (10, 50) sont contiguës l'une à l'autre de manière affleurante, dans laquelle, au niveau dudit point (S), **soit** la totalité de la section transversale de guide de lumière (Q) est remplie par le composant de matériau opaque (11, 91), **soit dans laquelle,** au niveau dudit point (S), la section transversale de guide de lumière (Q) est divisée en une première partie (Q1) comportant le composant de matériau opaque (11, 91) et une seconde partie (Q2) comportant le composant de matériau transparent (10, 90), dans laquelle, considéré sur la longueur du point (S) s'étendant dans l'extension longitudinale (LE) du guide de lumière (1, 1' ; 9, 9'), le composant de matériau opaque (11, 91) forme une partie d'une surface du guide de lumière (1', 9') et le composant de matériau transparent (10, 90) forme la partie restante de la surface du guide de lumière (1',9').

5. Pièce d'habillage intérieur (2, 8) selon la revendication 4,
**caractérisée en ce qu'**au moins un point (S2) comportant un composant de matériau opaque (91) est disposé au niveau d'une telle extrémité (E2) du guide de lumière (9') qui est opposée à l'au moins un moyen d'éclairage (3), dans laquelle la totalité de la section transversale de guide de lumière (Q) est remplie par le composant de matériau opaque (91) au niveau du point (S2).

6. Véhicule automobile (K), **caractérisé par** au moins un support de récipient pour boisson (4) selon l'une des revendications 1 à 3 ou **caractérisé par** au moins une pièce d'habillage intérieur (2, 8) selon l'une des revendications 4 à 5.
